# EUROPEAN PATENT APPLICATION

(11) **EP 4 759 500 A1**
(43) Date of publication of application: **17.06.2026**
(21) Application number: 24851831.8
(22) Date of filing: 06.08.2024
(51) Int. Cl.: B29B 7/08, C08G 63/91, C08G 63/672, B29K 67/00

(54) **MATERIAL, ORGANIC-INORGANIC HYBRID MATERIAL, AND METHOD FOR PRODUCING SAME**

(30) Priority: 08.08.2023 JP 2023129615
(71) Applicant: PetroChina Company Limited, Dongcheng District Beijing 100007 (CN)
(72) Inventor: MORITA, Seiji, Tokyo 104-0028 (JP)
(74) Representative: Fabry, Bernd
(86) International application number: PCT/JP2024/028007
(87) International publication number: WO 2025/033407

(57) **Abstract**

To provide a high-performance polymer derived from biological resources.

To provide a polymer whose basic unit is a polycyclic structure having multiple cyclic structures.

## Description

### Technical Field

Some aspects of the present invention relate to a material that includes at least a molecular structure derived from biological resources or a molecular structure similar to such a structure. In particular, the present invention relates to bioplastics, which are polymers having the above-described molecular structure as at least one repeating unit. In this specification, the term "bioplastic" refers not only to materials derived from biological resources but also to those that contain, as at least one repeating unit, a molecular structure identical or similar to one derived from biological resources even if the material itself is not derived from biological resources.

Furthermore, some aspects of the present invention relate to a material containing plastic, the above-mentioned material, or the above-mentioned polymer or bioplastic, in combination with an element having a lower electronegativity than carbon, a cation of such an element, or a compound containing such an element, as well as to a method for producing such a material.

### Background of the Invention

Growing concerns regarding microplastic pollution and related issues have drawn attention to bioplastic materials derived from biological resources such as plants. For example, JP 2020132790 A1 discloses a bioplastic that utilizes plant-derived hemicellulose.

JP 2001288331 A1 discloses cases in which inorganic materials such as talc, wollastonite, calcium carbonate, barium sulfate, mica, and glass fibers are kneaded with polymers such as polypropylene using a twin-screw extruder.

### Brief Summary of the Invention

### Problems to be Solved by the Invention

However, conventional bioplastics have had problems in that, for example, they do not possess sufficient strength for processing operations such as molding, stretching, or spinning.

In addition, conventional polymers containing inorganic materials have had issues such as insufficient uniformity in the state of mixing of the inorganic material within the polymer, which results in inadequate performance, mechanical strength, flexibility, and the like.

### Means for Solving the Problems

Some aspects of the material according to the present invention relate to a polymer having a plurality of structural units. A first structural unit among the plurality of structural units includes a first part and a second part, a portion of the first part and a portion of the second part being shared. The first part is a six-membered ring, and the six-membered ring includes a first oxygen atom, two first carbon atoms, two second carbon atoms, and one third carbon atom. The first oxygen atom and one of the two first carbon atoms form a first covalent bond, and the first oxygen atom and the other of the two first carbon atoms form a second covalent bond. One of the two first carbon atoms and one of the two second carbon atoms form a third covalent bond, and the other of the two first carbon atoms and the other of the two second carbon atoms form a fourth covalent bond. One of the two second carbon atoms and the one third carbon atom form a fifth covalent bond, and the other of the two second carbon atoms and the one third carbon atom form a sixth covalent bond.

The second part is a first five-membered ring composed of one of the first carbon atoms, one of the second carbon atoms, a second oxygen atom, a third oxygen atom, and one fourth carbon atom. The one first carbon atom and the second oxygen atom form a seventh covalent bond. The one second carbon atom and the third oxygen atom form an eighth covalent bond. The second oxygen atom and the one fourth carbon atom form a ninth covalent bond, and the third oxygen atom and the one fourth carbon atom form a tenth covalent bond.

Typical examples of the first part described above include sugars having a six-membered ring backbone composed of one oxygen atom and five carbon atoms, such as xylose, glucose, mannose, galactose, fucose, and rhamnose. The second part, for example, shares one covalent bond of the six-membered ring backbone of such sugars as described above and has a five-membered ring structure containing two oxygen atoms. Typical examples thereof include, for instance, acetal groups or ketal groups.

Each of the plurality of structural units of the above-described polymer further includes a third part. The third part is a second five-membered ring composed of the other of the two second carbon atoms, the one third carbon atom, a fourth oxygen atom, a fifth oxygen atom, and one fifth carbon atom.

The other second carbon atom and the fourth oxygen atom form an eleventh covalent bond, the one third carbon atom and the fifth oxygen atom form a twelfth covalent bond, the fourth oxygen atom and the one fifth carbon atom form a thirteenth covalent bond, and the fifth oxygen atom and the one fifth carbon atom form a fourteenth covalent bond.

In the above-described polymer, it is preferable that the one fourth carbon atom is bonded, directly or via a linking group, to a sixth carbon atom of a first carbonyl group.

In the above-described polymer, it is preferable that the one fifth carbon atom is bonded, directly or via a linking group, to a seventh carbon atom of a second carbonyl group.

It is preferable that, in the above-described polymer, the sixth carbon atom forms a fifteenth covalent bond with a sixth oxygen atom.

It is also preferable that, in the above-described polymer, the seventh carbon atom forms a sixteenth covalent bond with a seventh oxygen atom.

In the above-described polymer, it is preferable that a second structural unit included among the plurality of structural units has the same structure as the first structural unit, and that the sixth oxygen atom forms a seventeenth covalent bond with any one of the atoms constituting the second structural unit.

In the above-described polymer, it is preferable that a third structural unit included among the plurality of structural units has the same structure as the first structural unit, and that the seventh oxygen atom is bonded, either directly or via a linking group, to any one of the atoms included in the third structural unit.

In the above-described polymer, it is preferable that a third structural unit included among the plurality of structural units has the same structure as the first structural unit, and that the seventh oxygen atom forms an eighteenth covalent bond, via a linking group, with an eighth oxygen atom included in the third structural unit.

In the above-described polymer, it is preferable that the linking group is an alkylene group.

In the above-described polymer, it is preferable that at least one of the other first carbon atom and the one fourth carbon atom is bonded to a substituent containing a hydrogen atom, an alkyl group, a hydroxy group, or a heteroatom.

In the above-described polymer, it is preferable that at least one of the other first carbon atom and the one fifth carbon atom is bonded to a substituent containing a hydrogen atom, an alkyl group, a hydroxy group, or a heteroatom.

A material according to some aspects of the present invention includes the above-described polymer and a positive atom, which is an atom of an element having a lower electronegativity than carbon, or a compound having the positive atom.

In the above-described material, it is preferable that the positive atom is coordinated to at least one of the second oxygen atom and the third oxygen atom.

In the above-described material, the material includes the above-described polymer and a positive atom, which is an atom of an element having a lower electronegativity than carbon, or a compound having the positive atom.

Examples of the above-described polymer include, for instance, polymers represented by the general formulae (1) to (6) below.

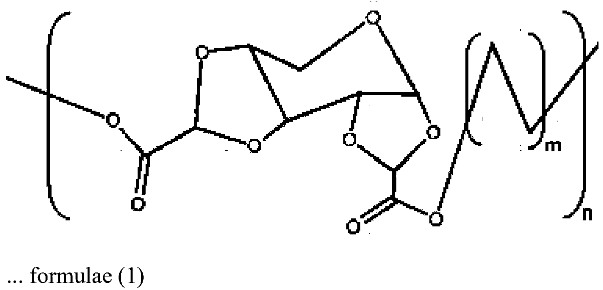

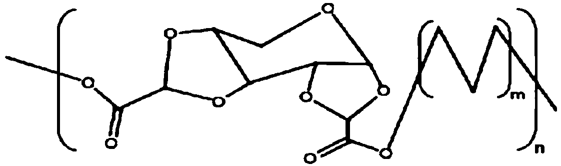

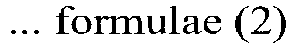

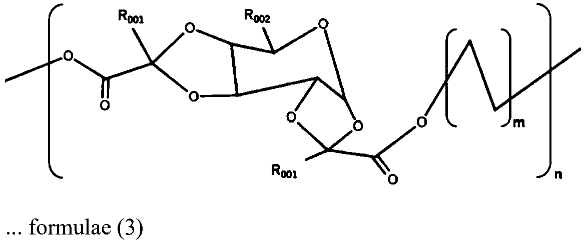

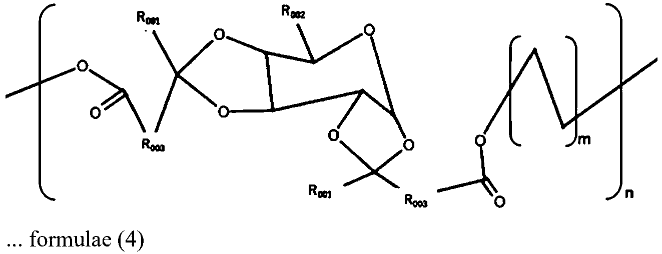

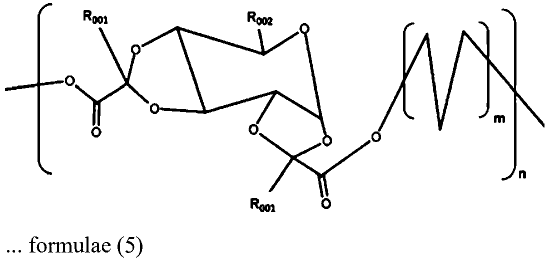

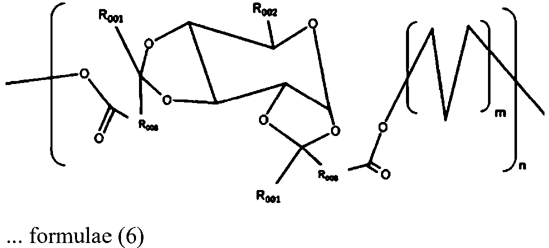

In the general formulae (1) to (6), m and n are an integer of 1 or greater and an integer of 2 or greater, respectively. R001 and R002 are each independently a hydrogen atom, an organic group, a substituent containing a heteroatom, a hydroxy group, a thiol group, or an organic group containing a heteroatom. R003 is an arylene group, an alkylene group, or an organic group containing a heteroatom.

A method for producing a solid according to some aspects of the present invention includes:
(a) introducing a first gas or a plurality of first particles into a processing chamber while a workpiece serving as a raw material for the solid is placed inside the processing chamber,
where, in step (a), at least a portion of the first gas or at least a portion of the plurality of first particles penetrates into the interior of the workpiece.

In the above-described method for producing a solid, it is preferable that the workpiece has a repeating structure of a plurality of basic units.

In the above-described method for producing a solid, it is preferable that each of the plurality of basic units includes at least one of a sugar backbone, an ester group, an arylene group, an ether group, an acetal group, a ketal group, a carbonyl group, and an alkylene group.

In the above-described method for producing a solid, it is preferable that the first gas or the plurality of first particles is at least partly composed of a first compound containing an atom of a first element whose electronegativity is less than 2.5.

In the above-described method for producing a solid, it is preferable that the first element is one of a Group 1 element, a Group 2 element, a Group 3 element, a Group 4 element, a Group 5 element, a Group 6 element, a Group 7 element, a Group 8 element, a Group 9 element, a Group 10 element, a Group 11 element, a Group 12 element, a Group 13 element, or a Group 14 element other than carbon.

In the above-described method for producing a solid, it is preferable that the electronegativity of the first element is 2.0 or less.

In the above-described method for producing a solid, it is preferable that the first element is any of aluminum, titanium, nickel, iron, copper, or zinc.

In the above-described method for producing a solid, it is preferable that the first compound has an organic group or a substituent containing an organic group.

In the above-described method for producing a solid, it is preferable that vibration or oscillation is applied to the workpiece during at least a portion of the period in which step (a) is performed.

In the above-described method for producing a solid, it is preferable that the method further includes step (b), in which vibration or oscillation is applied to the workpiece after step (a). In the above-described method for producing a solid, it is preferable that, after step (a), or after at least one step performed following step (a), the method further includes step (c), in which a second gas or a plurality of second particles is introduced into the processing chamber while the workpiece is placed inside the processing chamber.

In the above-described method for producing a solid, it is preferable that the second gas or the plurality of second particles is composed at least of a second compound.

Through the above-described method for producing a solid, it is possible, for example, to uniformly diffuse an inorganic substance or another material into the interior of a plastic material, or to cause atoms, units, or substituents constituting the plastic material to interact with atoms or substituents contained in the penetrating material. As a result, it is also possible to create an organic-inorganic hybrid material having new functions or being a high-quality plastic material.

In the method for producing a material according to some aspects of the present invention, for example, a gas or aerosol that interacts or bonds with substituents, units, or atoms constituting a member such as a plastic material is first brought into contact with the member. By this operation, at least a portion of the gas or aerosol penetrates into the interior of the member.

By the substance penetration method, in which a gas or aerosol is caused to penetrate into the interior of a member serving as a workpiece in the manner described above, atoms, units, or substituents constituting at least a portion of the penetrating gas or aerosol exhibit coordination, electrostatic interaction, or the like with atoms, units, or substituents constituting the member.

Depending on the combination of the member serving as the workpiece and the gas or aerosol, it is also possible for a covalent bond to be formed between atoms, units, or substituents constituting the member and atoms, units, or substituents constituting at least a portion of the gas or aerosol that penetrates the member via the substance penetration method.

In the substance penetration method, because a substance that reacts with the substance first penetrated into the workpiece can be subsequently penetrated in the next step, even if the uniformity within the workpiece is low when a substance is penetrated in a single step, it is possible, for example, by penetrating multiple types of substances in separate stages, to disperse another substance inside the workpiece with high uniformity or high dispersibility.

By dispersing another substance inside the workpiece with such high uniformity or dispersibility, it is possible to impart to the workpiece various performances or properties that contribute to added product value, such as high mechanical strength, heat resistance, electrical conductivity, corrosion resistance, gas barrier properties, toughness, dielectric properties, or refractive index.

As a typical example of the above-described plastic material, polyesters may be mentioned. Polyesters are obtained by a condensation reaction between a polycarboxylic acid such as a dicarboxylic acid and a polyol, which is a compound having multiple hydroxy groups.

Specific examples of plastic materials include: polyethylene terephthalate (PET), produced by copolymerizing terephthalic acid (TPA) and ethylene glycol (EG); polytrimethylene terephthalate (PTT), produced by copolymerizing terephthalic acid (TPA) and 1,3-propanediol (PDO); and polybutylene terephthalate (PBT), produced by copolymerizing terephthalic acid and 1,4-butanediol.

At least one of the polyols such as ethylene glycol or propanediol, and the polycarboxylic acids used as raw materials, may be derived not only from fossil resources but also from biological resources such as plants including corn, sugarcane, or wood.

Polycarboxylic acids can also be produced from saccharides. Examples of saccharides include polysaccharide derivatives or monosaccharide derivatives obtained from corn or corncobs, sugarcane, or wood.

Examples of polysaccharide derivatives include cellulose derivatives, starch derivatives, glucose condensation product derivatives, sucrose derivatives, and xylose condensation product derivatives. Cellulose derivatives include cellulose acetate, cellulose acetate propionate, cellulose benzoate, and fatty acid cellulose. Starch derivatives include starch acetate, starch acetate propionate, starch benzoate, and fatty acid starch.

Glucose condensation product derivatives include glucose condensation product acetate, glucose condensation product acetate propionate, glucose condensation product benzoate, and fatty acid glucose condensation products. Sucrose derivatives include sucrose acetate, sucrose acetate propionate, sucrose benzoate, and fatty acid sucrose. Xylose condensation product derivatives include xylose condensation product acetate, xylose condensation product acetate propionate, xylose condensation product benzoate, and fatty acid xylose condensation products.

Examples of monosaccharide derivatives include glucose derivatives such as glucose acetate, glucose acetate propionate, glucose benzoate, or fatty acid glucose; and xylose derivatives such as xylose acetate, xylose acetate propionate, xylose benzoate, or fatty acid xylose.

As substituents on the carbon atoms of the polysaccharide or monosaccharide used as a raw material, hydroxy groups, carbonyl groups, alkyl groups, acyl groups, substituents containing carbonyl groups, substituents containing heteroatoms, or substituents containing alkyl groups may be used. However, it is desirable that each of the two directly bonded carbon atoms of the polysaccharide or monosaccharide carries a hydroxy group. It is further preferable to use a polysaccharide or monosaccharide having two or more covalent bonds between carbon atoms each bearing a hydroxy group.

By reacting a saccharide in which carbon atoms bearing hydroxy groups are mutually bonded with a carboxylic acid having a carboxyl group and another carbonyl group, it is possible to obtain a carboxylic acid having a ketal structure or an acetal structure.

By reacting a polysaccharide or monosaccharide having two or more covalent bonds between hydroxy-bearing carbon atoms with a carboxylic acid having a carboxyl group and another carbonyl group, it is possible to obtain a polycarboxylic acid having two or more ketal or acetal structures.

By reacting a saccharide or monosaccharide in which two or more covalent bonds between hydroxy-bearing carbon atoms are included in a ring structure with a carboxylic acid having a carboxyl group and another carbonyl group, it is possible to obtain a polycarboxylic acid in which two or more covalent bonds originating from the saccharide ring structure each share a cyclic structure such as a five-membered or six-membered ring having a ketal or acetal structure.

A polymer obtained by reacting such a polycyclic polycarboxylic acid with, for example, a polyol is expected to exhibit high mechanical strength and/or heat resistance.

A method for producing a plastic material containing an inorganic compound according to some aspects of the present invention includes:
a heating step of heating a plastic material placed in a chamber section;
a vacuum step of evacuating the chamber section;
an inorganic-material supplying step of supplying, into the chamber section, an inorganic substance in a gaseous state at a first temperature;
a oscillating step of oscillating the plastic material within the chamber section to produce a plastic material containing an inorganic compound;
an exhausting step of exhausting the chamber section after the oscillating step;
a redox-material supplying step of supplying, into the chamber section after the exhausting step, at least one of an oxide and a reducing agent at a second temperature lower than the first temperature; and
a oscillating step of oscillating the plastic material containing the inorganic compound within the chamber section.

A method for producing an organic-inorganic hybrid material according to some aspects of the present invention includes:
a heating step of heating a plastic material placed in a chamber section;
a vacuum step of evacuating the chamber section;
an inorganic-material supplying step of supplying, into the chamber section, an inorganic substance in a gaseous state at a first temperature;
a oscillating step of oscillating the plastic material within the chamber section to produce an organic-inorganic hybrid material;
an exhausting step of exhausting the chamber section after the oscillating step;
a redox-material supplying step of supplying, into the chamber section after the exhausting step, at least one of an oxide and a reducing agent at a second temperature lower than the first temperature; and
a oscillating step of oscillating the organic-inorganic hybrid material within the chamber section.

According to some aspects of the present invention, it is possible to obtain, for example, a material having excellent mechanical strength and/or heat resistance.

### Brief Description of the Several Views of the Drawing

[FIG. 1] A diagram illustrating an outline of the configuration of a substance penetration apparatus.
[FIG. 2] A diagram illustrating the procedure for carrying out penetration of a substance into a polymer.
[FIG. 3] A diagram illustrating changes inside the polymer when a substance is penetrated into the polymer.
[FIG. 4] A diagram illustrating changes inside the polymer when a substance is penetrated into the polymer.
[FIG. 5] A diagram illustrating changes inside the polymer when a substance is penetrated into the polymer.
[FIG. 6] A diagram illustrating changes inside the polymer when a substance is penetrated into the polymer.

### Detailed Description of the Invention

Hereinafter, embodiments for carrying out the present invention (hereinafter simply referred to as "the present embodiment") will be described in detail with reference to the drawings as appropriate. However, the present invention is not limited to the embodiments described below. The present invention may be modified in various ways without departing from its spirit. In the drawings, identical elements are denoted by identical reference numerals, and repeated descriptions are omitted. Unless otherwise specified, positional relationships such as upper/lower or left/right are based on those illustrated in the drawings. Furthermore, the dimensional proportions shown in the drawings are not limited to the illustrated proportions.

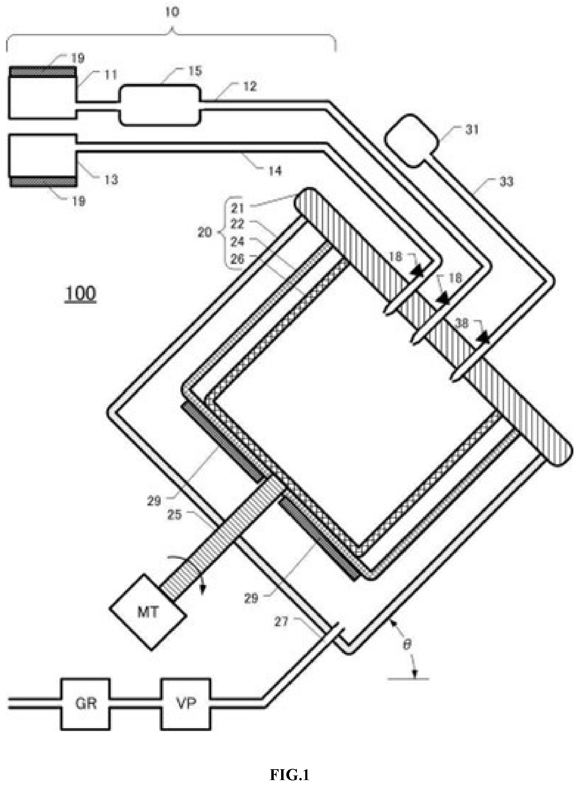

FIG. 1 is a schematic cross-sectional view of a substance penetration apparatus 100 according to some aspects of the present invention. The substance penetration apparatus 100 generally includes a material supply section 10 and a chamber section 20. The material supply section 10 has a configuration capable of introducing a plurality of types of materials into the chamber section 20. As a typical example in this embodiment, as shown in FIG. 1, the configuration allows two or three types of materials to be introduced into the chamber section 20.

The material supply section 10 includes: a primary tank 11 for the first material; a temperature adjustment unit 19 for adjusting the temperature of the primary tank 11 for the first material; a buffer tank 15 for temporarily storing the first material between the discharge from the primary tank 11 for the first material and its introduction into the chamber section 20; at least a portion of a connecting pipe 12 that connects the buffer tank 15 for the first material to a nozzle 18 for introducing the first material into the chamber section 20; a primary tank 13 for the second material; a temperature adjustment unit 19 for adjusting the temperature of the second material tank 13; and at least a portion of a connecting pipe 14 that connects the primary tank 13 for the second material to a nozzle 18 for introducing the second material into the chamber section 20.

Although not shown in FIG. 1, similarly to the buffer tank 15 for the first material, a buffer tank for the second material may be appropriately provided between the primary tank 13 for the second material and the nozzle 18 connected via the connecting pipe 14, depending on conditions such as the properties or boiling point of the second material, or the vacuum level set in the chamber section 20.

The primary tank 11 for the first material accommodates, for example, a first material that is in a solid or liquid state at room temperature, and by appropriately setting the temperature of the temperature adjustment unit 19, it is possible to generate a gas or aerosol or a plurality of particles.

The buffer tank 15 for the first material may also be provided with a temperature adjustment function similar to the primary tank for the first material, and at least a portion of the connecting pipe 12 may also be provided with a temperature adjustment function.

In the substance penetration apparatus 100 according to the present embodiment, the temperature adjustment unit 19 and the above-described temperature adjustment functions are typically configured to allow the temperature to be set to any value within a range of approximately 50°C to 300°C.

Control of the delivery of the first material to the chamber section 20 may be performed using the temperature adjustment functions of the temperature adjustment unit 19 described above. However, for example, a configuration may be adopted in which valves are provided at least one of: between the primary tank 11 for the first material and the buffer tank 15 for the first material; between the buffer tank 15 for the first material and the nozzle 18; and on the nozzle 18 itself, thereby enabling control of the introduction of the first material into the chamber section 20.

By appropriately setting, for example, the opening diameter of the valve when opened or the timing of intermittent opening and closing, the directionality of the first material introduced into the chamber section 20, as well as the velocity or temperature of the gas molecules or particles, can be suitably controlled when the first material is introduced as a gas or a plurality of particles.

Delivery of the second material from the primary tank 13 for the second material may also be performed using the temperature adjustment functions of the temperature adjustment unit 19. However, similarly, a valve may be provided either between the primary tank 13 for the second material and the nozzle 18 connected via the connecting pipe 14, or on the nozzle 18 itself, thereby enabling control of the introduction of the second material into the chamber section 20. The valve for the second material may have the same configuration or may be controlled in the same manner as the valve corresponding to the supply line for the first material.

At least a portion of at least one of the primary tank 11 for the first material, the buffer tank 15 for the first material, the connecting pipe 12, the primary tank 13 for the second material, and the connecting pipe 14 may be made of, for example, stainless steel, an aluminum alloy, carbon steel, or fiber-reinforced plastic. The material is appropriately selected in consideration of factors such as the properties of the first and second materials, the temperature set by the temperature adjustment unit 19, and the conditions for introducing the materials into the chamber section 20. It is preferable that the inner surfaces of the above-mentioned components have been treated, for example, with glass lining or fluorine lining.

As the compound accommodated in the primary tank 11 for the first material, for example, a compound containing an element having an electronegativity of less than 2.5 may be used. More specifically, a compound containing an element having an electronegativity of 2.0 or less may be used. Considering the efficiency of introducing the material into the chamber section 20, compounds in which the above-described element is bonded directly or via a heteroatom to an organic group are preferable because they tend to exhibit relatively high volatility. Specific examples of such compounds include so-called organometallic compounds such as organozinc aluminum and organozinc zinc, organosilicon compounds, and so-called non-Werner complexes in which a transition metal element is bonded to a carbonyl group or an allyl group. These compounds generally have relatively high volatility and are preferably used.

The primary tank 13 for the second material accommodates, for example, a gas for inducing reactions such as oxidation, reduction, nitridation, or dehydration, or a liquid or solid for generating such a gas.

### <Structure of the Chamber Section 20>

The chamber section 20 includes: a containment container 26 for accommodating the workpiece; a rotation mechanism 24 for rotating the containment container 26; a reduced pressure container 22 for depressurizing inside the containment container 26 to below atmospheric pressure; and a lid portion 21 for maintaining the degree of reduced pressure of the reduced pressure container 22 or suppressing pressure increase.

The materials of the lid portion 21, the reduced pressure container 22, the rotation mechanism 24, and the containment container 26 may be, for example, metal materials such as stainless steel or aluminum.

The external shape is preferably one having an internal space, such as a rectangular parallelepiped, a cubic shape, or a cylindrical shape. The detailed shape and dimensions are appropriately selected based on the shape or properties of the workpiece to be processed. It is preferable that the chamber section 20 forms an angle θ with the floor surface, and it is particularly preferable that the angle θ be 20° to 80°. This configuration allows, for example, the operator to easily attach or detach the containment container 26. In addition, it offers advantages such as facilitating the work of placing the workpiece into the containment container 26 or removing the processed workpiece from the container.

The containment container 26 may be detachable from the rotation mechanism 24 or may be fixed to the rotation mechanism 24. When the containment container 26 is detachable from the rotation mechanism 24, the operator can easily place the workpiece into the container or remove the processed workpiece after detaching the containment container 26 from the chamber section 20.

For example, the containment container 26 may be fixed to the rotation mechanism 24 using fastening members such as screws or bolts, or a structure in which the containment container 26 and the rotation mechanism 24 are integrally formed may also be used.

The rotation mechanism 24 is connected to a rotation motor MT and a shaft 25 that transmits the power of the rotation motor MT, in order to rotate the containment container 26. The rotation motor MT and the rotation mechanism 24 may be directly connected via the shaft 25, or they may be indirectly connected via gears or a belt and the shaft 25. The rotation mechanism 24 can rotate, for example, at 5 rpm to 200 rpm by means of the rotation motor MT.

The rotation speed of the rotation mechanism 24 may be kept constant or may be varied over time depending on the processing conditions of the workpiece.

In the substance penetration apparatus 100, the shaft 25 penetrates the reduced pressure container 22. A magnetic fluid seal (not shown) provided on the reduced pressure container 22 allows rotation even when the degree of reduced pressure inside the reduced pressure container 22 becomes high.

Even without using the rotation mechanism 24, it is possible to cause the material to penetrate into the interior of the workpiece. In such a case, it is preferable that, during at least a portion of the period in which the first material or the second material is introduced into the chamber section 20 while the workpiece is accommodated in the containment container 26, oscillation or vibration is applied to the workpiece. As methods for applying vibration or oscillation, for example, vibration or oscillation may be applied to the containment container 26 or directly to the workpiece, or the discharge amount of the gas or aerosol supplied to the workpiece may be varied at a required or predetermined cycle.

A chamber heater 29 is attached to the bottom surface of the rotation mechanism 24. This allows the heat generated by the chamber heater 29 to heat the containment container 26 via the rotation mechanism 24. By means of the chamber heater 29, the workpiece inside the containment container 26 can be heated, for example, to a temperature corresponding to the processing conditions applied to the workpiece.

The chamber heater 29 may be attached not only to the bottom of the rotation mechanism 24 but also, for example, to the side surface of the rotation mechanism 24, the containment container 26, the reduced pressure container 22, or the lid portion 21. Of course, the chamber heater 29 may be attached to two or more of the rotation mechanism 24, the containment container 26, the reduced pressure container 22, and the lid portion 21, or to two or more locations of any one of these components.

The reduced pressure container 22 is a mechanism for depressurizing inside the containment container 26. A reduced pressure pipe 27, connected to a vacuum pump VP, is connected to the reduced pressure container 22.

The vacuum pump VP can reduce the pressure inside the containment container 26 to, for example, 10⁻³ Pa to 100 Pa.

The degree of reduced pressure can be increased by arranging multiple vacuum pumps VP in series or by combining different types of vacuum pumps. For example, a rotary pump may first be operated while connected to the reduced pressure container 22, and once a certain level of reduced pressure is achieved, the connection between the reduced pressure container 22 and the vacuum system may be switched from the rotary pump to a turbomolecular pump, thereby achieving a higher degree of reduced pressure. The configuration and type of the vacuum pump VP are appropriately selected in accordance with the desired degree of reduced pressure within the chamber section 20.

A gas exhaust removal unit GR is connected to the reduced pressure pipe 27. Among the gas or aerosol of the first material introduced into the chamber section 20, the portion that is not used for processing the workpiece or the excess portion is captured by the gas exhaust removal unit GR or treated by the gas exhaust removal unit GR.

The lid 21 serves to enhance the airtightness inside the reduced pressure container 22. An O-ring or another sealing member is disposed on the lid portion 21 or on the portion of the reduced pressure container 22 that makes contact with the lid portion 21. The connecting pipes 12 and 14 are attached to the lid portion 21, and it is preferable that, when the lid portion 21 is in the closed state, the nozzle 18 connected to the connecting pipe 12 and the nozzle connected to the connecting pipe 14 extend into the interior of the containment container 26.

In addition, a connecting pipe 33 having a nozzle 38 is attached to the lid portion 21. A gas tank 31 is connected to the connecting pipe 33. The gas tank 31 may contain, for example, an inert gas such as nitrogen, argon, or helium; a reducing gas such as hydrogen gas, carbon monoxide gas, or a hydrocarbon gas; a nitriding gas such as ammonia; or an oxidizing gas such as oxygen gas, chlorine gas, ozone gas, or water vapor.

When the processing of the workpiece conducted under reduced pressure state is completed, the gas contained in the gas tank 31 may be used to restore the internal pressure of the reduced pressure container 22 to atmospheric pressure.

Although FIG. 1 does not illustrate control devices such as timers, temperature sensors, or computers, a control device may be appropriately provided to control at least part of the functions of the substance penetration apparatus 100, such as: the temperature adjustment unit 19; the chamber heater 29; a valve or monitoring device installed in the supply line route of the first material leading to the chamber section 20; a valve or monitoring device installed in the supply line route of the second material leading to the chamber section 20; a valve or monitoring device installed in the route from the gas tank 31 to the chamber section 20; the vacuum pump; or the rotation mechanism 24.

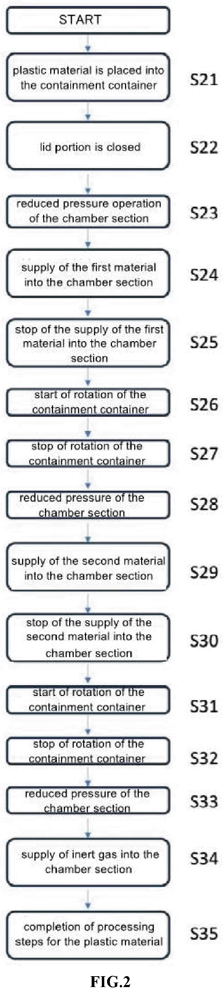

FIG. 2 is a flowchart illustrating the substance penetration method, which will be described below with reference to the drawing.

A plastic material serving as the workpiece is placed into the containment container 26 (S21). It is preferable that the temperature of the plastic material be lower than the chamber temperature. It is further preferable that the internal temperature of the plastic material be lower than the surface temperature of the plastic material.

When the first material penetrates into the plastic material serving as the workpiece, there are cases in which the internal temperature of the plastic material tends to increase. Therefore, when the workpiece is a plastic material having a relatively low melting point, it is preferable, for example, to measure the temperature of the chamber section 20 wall using a thermocouple or the like prior to the penetration of the first material, and to place the plastic material on a stage on which a coolant or cold air is circulated, thereby adjusting the temperature of the plastic material to be lower than the temperature of the chamber section 20 wall.

After step S21, it is preferable that the subsequent accommodation of the plastic material into the containment container (S22) be performed during a period in which there is no significant change from the temperatures measured at the time of temperature measurement in the above-described sections.

If the containment container 26 is detachable, the plastic material serving as the workpiece may be placed into the containment container 26 while it is removed from the rotation mechanism 24. If the containment container 26 is fixed, the plastic material may be placed into the containment container 26 within the chamber section 20.

Next, a reduced pressure operation of the chamber section 20 (S23) is performed using the vacuum pump VP. For example, the vacuum pump VP may be used to depressurize inside the containment container 26 to 100 Pa or less. After step S23 is performed, the supply of the first material into the chamber section 20 is initiated (S24).

The supply of the first material into the chamber section 20 (S24) is performed, for example, by heating the primary tank 11 for the first material using the temperature adjustment unit 19 attached to the primary tank 11.

As a result, the first material, which is in a liquid state at room temperature, becomes gaseous or aerosolized, and the first material, which is in a solid state at room temperature, becomes a gas or aerosol by sublimation or the like, and is supplied to the containment container 26 in which the workpiece is accommodated.

During at least a portion of the period in which the gaseous or aerosolized first material and the workpiece are in contact with each other within the containment container 26, the chamber section 20 may be heated by the heater 29, for example. For example, when the workpiece is a plastic material, it is typically preferable to heat it to 80°C to 150°C.

Before performing step S24, an inert gas (such as nitrogen, argon, or helium) may be introduced into the chamber section 20.

By doing so, for example, when the intention is to cause a desired atom or substituent constituting the plastic material to react or interact with the first material, it becomes possible to suppress reactions or interactions with other substances during the process in which the first material penetrates into the plastic material.

After stopping the supply of the first material into the chamber section 20 (S25), rotation of the containment container 26 is initiated (S26), followed by stopping the rotation of the containment container 26 (S27).

Next, reduced pressure of the chamber section 20 is performed again (S28). By this reduced pressure operation, it becomes possible to remove at least a portion of the first material supplied into the chamber section 20 that did not penetrate the workpiece, or that adhered to the interior of the chamber section 20.

By performing step S28, when the second material described later is supplied into the chamber section 20, it becomes possible to remove the excess first material that did not penetrate the workpiece or that adhered to the interior of the containment container 26.

After that, the supply of the second material into the chamber section 20 is initiated (S29). As the second material, a substance that reacts with the first material that has penetrated into the plastic material serving as the workpiece may be used.

By performing step S29, it becomes possible to introduce into the interior of the workpiece substances that are difficult to introduce directly or in a single step-for example, substances having a low vapor pressure, or substances requiring high temperatures or high vacuum conditions in order to volatilize or aerosolize.

As a specific example, metal oxides and inorganic metal salts generally have low vapor pressures and therefore require high temperatures or high vacuum conditions in order to volatilize or aerosolize. For instance, when the first material is an organometallic compound-such as trimethylaluminum-having an organic group bonded to a metal element, and the second material is a substance that reacts with the organometallic compound, such as water or oxygen, the organometallic compound volatilizes more readily than the corresponding metal oxide or inorganic salt. Accordingly, by using the substance penetration apparatus 100, the organometallic compound can be caused to penetrate into the interior of the workpiece.

Furthermore, organometallic compounds generally have lower degrees of association compared with the corresponding metal oxides or inorganic salts, and even when they form clusters, the cluster size tends to be small. Accordingly, they have the advantage of being easily diffusible into the interior of the workpiece.

By additionally supplying into the containment container 26 the second material exhibiting reactivity with the organometallic compound, the first and second materials react within the interior of the workpiece. As a result, it becomes possible to introduce metal oxides or inorganic salts-materials that are difficult to introduce directly or in a single step.

After step S29, the supply of the second material into the chamber section 20 is stopped (S30), followed by initiation of rotation of the containment container 26 (S31) and subsequent stopping of the rotation of the containment container 26 (S32). Thereafter, reduced pressure of the chamber section 20 is performed (S33), and then an inert gas is supplied into the chamber section 20 (S34). Through these operations, the series of processing steps for the plastic material is completed (S35).

The reduced pressure operation in step S33 is carried out, similarly to step S28 described above, to remove at least a portion of the second material that has not penetrated into the interior of the workpiece, the second material adhering to the interior of the containment container 26, or the unreacted portion of the second material that has not fully reacted with the first material.

Among the above series of steps, depending on the combination of the workpiece and the first material, it is also possible to shorten the overall processing time. For example, the processing may be performed such that at least a portion of the period from initiation of supply of the first material into the chamber section (S24) to the stopping of its supply (S25), or at least a portion of the period from reduced pressure of the chamber section 20 (S23) to S24, overlaps in time with at least a portion of the period from initiation of rotation of the containment container 26 (S26) to stopping of the rotation of the containment container 26 (S27).

Similarly, it is possible to shorten processing time by performing the steps such that at least a portion of the period from reduced pressure of the chamber section 20 (S28) to initiation of supply of the second material into the chamber section (S29), or at least a portion of the period from initiation of supply of the second material into the chamber section (S29) to stopping of its supply, overlaps in time with at least a portion of the period from initiation of rotation of the containment container 26 (S31) to stopping of the rotation of the containment container 26 (S32).

### <Examples of Plastic Materials Subject to the Substance Penetration Method>

Specific examples of plastic materials to which the substance penetration method can be applied include, for example, polyethylene terephthalate (PET), which is synthesized by copolymerizing terephthalic acid (TPA) and ethylene glycol (EG); polytrimethylene terephthalate (PTT), which is synthesized by copolymerizing terephthalic acid (TPA) and 1,3-propanediol (PDO); and polybutylene terephthalate (PBT), which is synthesized by copolymerizing terephthalic acid and 1,4-butanediol.

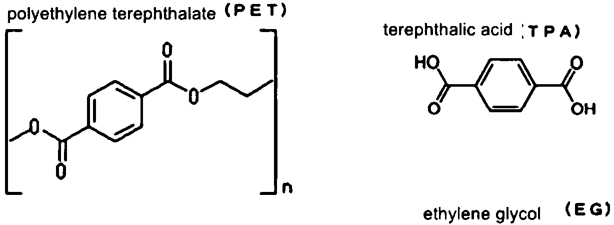

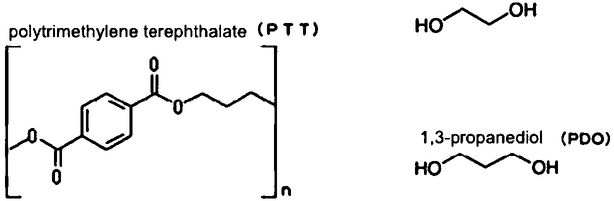

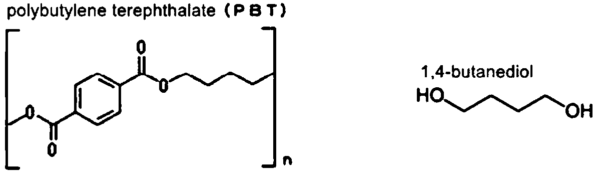

At least one of the polyols such as ethylene glycol or propanediol, and the polycarboxylic acids used as raw materials for synthesizing the above-described plastic materials may be derived not only from fossil resources but also from biological resources such as plants, including corn, sugarcane, or wood.

The plastic materials to which the substance penetration method can be applied may also be those having a sugar backbone as described below.

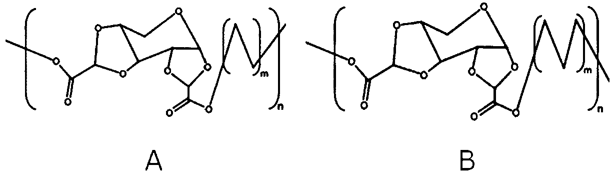

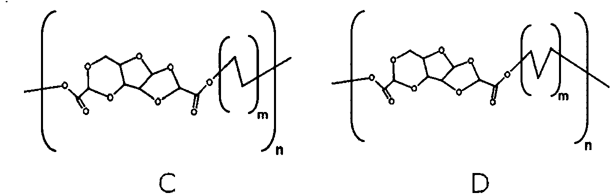

The polymer having the above-described sugar backbone is a polymer having a repeating structure in which the basic unit is composed of a plurality of cyclic structures that each contain an oxygen atom and each share two covalent bonds with the cyclic structure.

In the above-described basic unit, A and B each have a structure in which a six-membered ring containing one oxygen atom shares two of its covalent bonds with respective cyclic structures containing two oxygen atoms. The two cyclic structures, each containing two oxygen atoms, are both five-membered rings, and the two oxygen atoms contained in each of the two five-membered rings are directly bonded to carbon atoms constituting the above-described six-membered ring.

Further, in the above-described basic unit, each of the two five-membered rings is bonded to a carbon atom of a carboxyl group. Of the two carboxyl groups, in one carboxyl group one of the two oxygen atoms is bonded to an adjacent basic unit, while in the other carboxyl group one of the two oxygen atoms is bonded to an adjacent basic unit via a linking group.

In the above-described basic unit, C and D each have a structure in which a five-membered ring containing one oxygen atom shares two of its covalent bonds with respective cyclic structures containing two oxygen atoms. The two cyclic structures, each containing two oxygen atoms, are a six-membered ring and a five-membered ring. Of the two oxygen atoms constituting the six-membered ring, one oxygen atom is directly bonded to a carbon atom constituting the central five-membered ring, while the other oxygen atom is bonded to a carbon atom constituting the central five-membered ring via one intervening carbon atom.

In the above-described basic unit, the six-membered ring and the five-membered ring, each of which shares one covalent bond with the central five-membered ring, are respectively bonded to a carbon atom of a carboxyl group. Of the two carboxyl groups, in one carboxyl group one of the two oxygen atoms is bonded to an adjacent basic unit, while in the other carboxyl group one of the two oxygen atoms is bonded to an adjacent basic unit via a linking group. A and B, in particular, have the advantage that the portion corresponding to the central six-membered ring of the polycyclic structure is stable, resulting in good strength, elongation, and heat resistance; moreover, by performing substance penetration, the strength, elongation, and heat resistance can be further improved. On the other hand, in C and D, the stability of the portion corresponding to the central five-membered ring of the polycyclic structure is lower than that of the six-membered ring in A and B. Therefore, compared with A and B, C and D tend to provide polymers having lower strength, elongation, and heat resistance. However, because substance penetration improves the strength, elongation, and heat resistance, C and D possess favorable characteristics as workpieces for substance penetration.

An outline of a synthesis procedure for a tricyclic plastic material having a sugar-based basic unit will be described below using D-xylose as an example of a monosaccharide.

By reacting D-xylose with glyoxylic acid, which is a carboxylic acid having a formyl group, a tricyclic polycarboxylic acid is synthesized. Further, by methyl-esterifying the carboxylic acid, dimethyl glyoxylate xylose, which serves as a monomer, is obtained. By reacting this monomer with ethylene glycol, polyethylene diglyoxylate xylose can be produced.

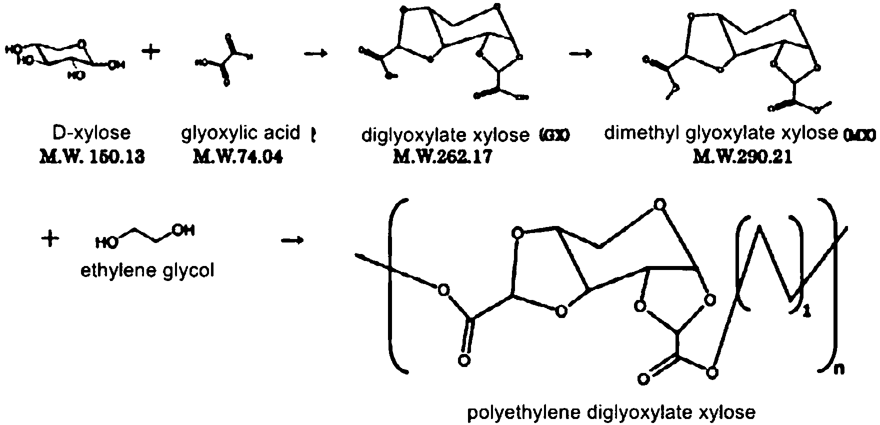

Polyhexylene diglyoxylate xylose can be obtained by reacting 1,6-hexanediol, used as the polyol in place of ethylene glycol, with dimethyl glyoxylate xylose.

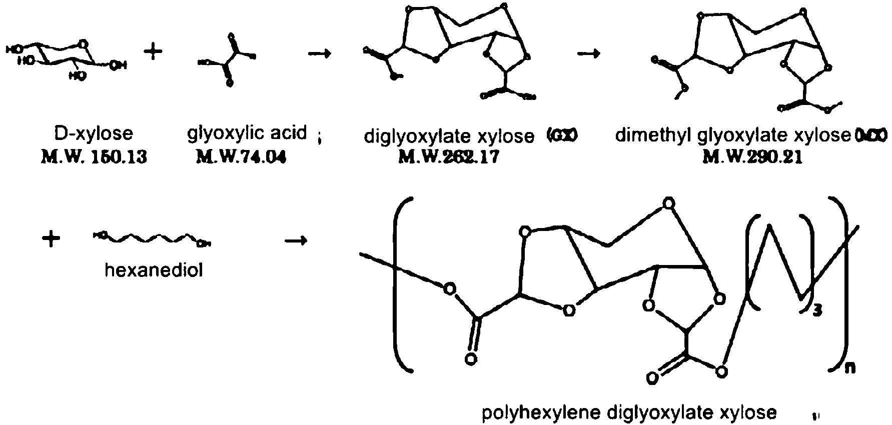

Similarly, polypropylene diglyoxylate xylose can be obtained by reacting 1,3-propanediol, used as the polyol in place of ethylene glycol, with dimethyl glyoxylate xylose.

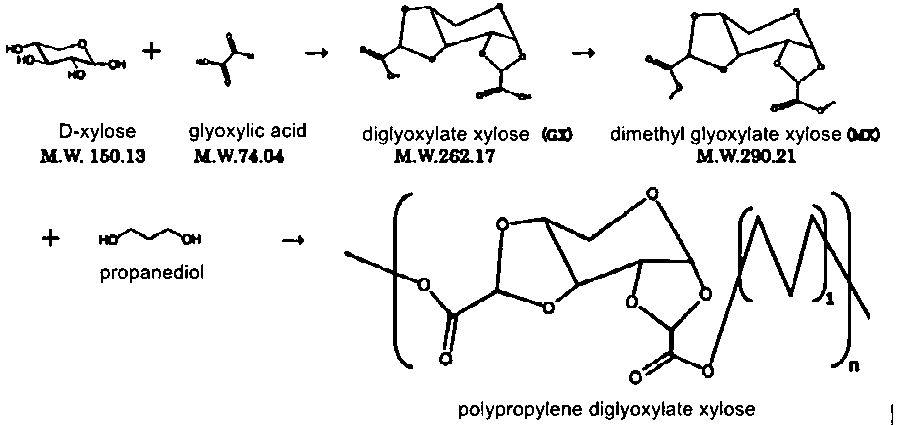

As the sugar raw material, a compound represented by the following general formula may be used: 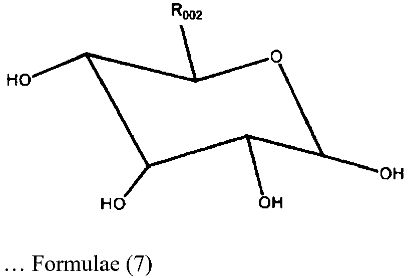 (R₀₀₄ is a hydrogen atom, an organic group, a substituent containing a heteroatom, a hydroxy group, a thiol group, or an organic group containing a heteroatom.)

Specific examples include D-xylose, arabinose, and ribose, which are each represented by the following general formula.

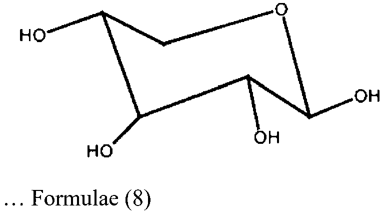

Specific examples include, for example, deoxysugars, fucose, or rhamnose, each represented by the following general formula.

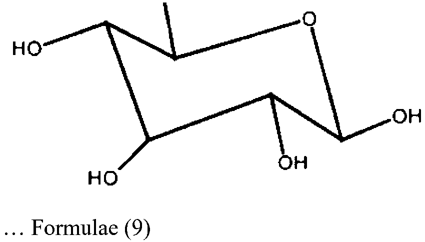

Specific examples further include, for example, glucose, mannose, or galactose, each represented by the following general formula.

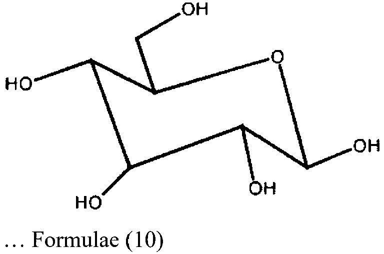

To synthesize the above-mentioned sugars and tricyclic monomers having multiple cyclic backbones, for example, the sugars described above are reacted with a carboxylic acid represented by the following general formula and having a carbonyl group or a formyl group: 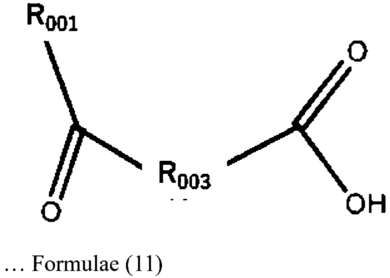 (R₀₀₅ is a hydrogen atom, an organic group, a substituent containing a heteroatom, a hydroxy group, a thiol group, or an organic group containing a heteroatom; and R₀₀₆ is an arylene group, an alkylene group, or an organic group containing a heteroatom.)

Examples of carboxylic acids having a carbonyl group or a formyl group include glyoxylic acid, pyruvic acid, 2-oxobutyric acid (2-ketobutyric acid), 6-oxoheptanoic acid, and 4-acetylbutyric acid.

When a sugar represented by general formula (11) is reacted with a carboxylic acid having a carbonyl group and represented by general formula (7), a polycyclic monomer represented by the following general formula can be obtained: 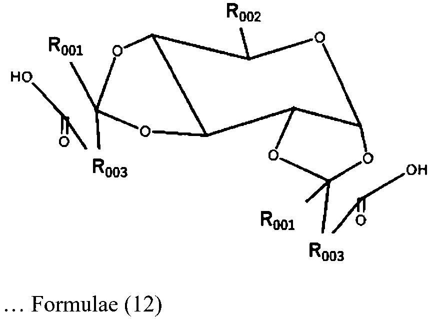 (R₀₀₄ is a hydrogen atom, an organic group, a substituent containing a heteroatom, a hydroxy group, a thiol group, or an organic group containing a heteroatom; R₀₀₅ is a hydrogen atom, an organic group, a substituent containing a heteroatom, a hydroxy group, a thiol group, or an organic group containing a heteroatom; and R006 is an arylene group, an alkylene group, or an organic group containing a heteroatom.)

By further reacting the polycarboxylic acid represented by general formula (12) with a polyol, a polycyclic monomer represented by the following general formula can be obtained: 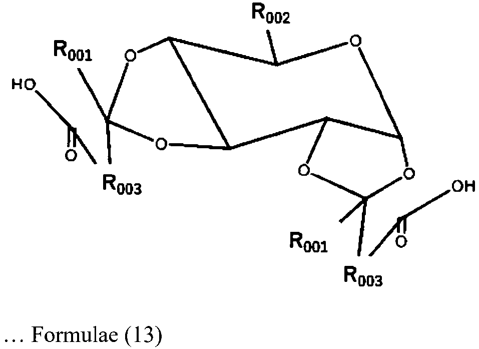 (m and n are an integer of 1 or greater and an integer of 2 or greater, respectively; R₀₀₄ is a hydrogen atom, an organic group, a substituent containing a heteroatom, a hydroxy group, a thiol group, or an organic group containing a heteroatom; R₀₀₅ is a hydrogen atom, an organic group, a substituent containing a heteroatom, a hydroxy group, a thiol group, or an organic group containing a heteroatom; and R₀₀₆ is an arylene group, an alkylene group, or an organic group containing a heteroatom.)

The above-described plastic materials or polymers, after being molded by injection molding, film molding, extrusion molding, optical molding, microwave molding, press molding, inflation molding, melt spinning, nonwoven fabric molding, or other molding processes, may be used as molded articles in the substance penetration method.

### <Workpieces for the Substance Penetration Method>

As the workpiece, for example, the above-described plastic materials or polymers may be used. However, other resins, polymers, inorganic substances, ores, or plastic materials may also be appropriately selected depending on the intended use or desired physical properties.

A typical example of a workpiece in the substance penetration apparatus according to some aspects of the present invention is a plastic material. Examples of its shapes include: pellet-like shapes having a diameter of 0.1 mm to 5 mm and a length of 0.1 mm to 5 mm; fiber-like shapes having a diameter of less than 0.5 mm and a length of 3 mm or more; particle-like shapes having a spherical form with a diameter of 1 mm or greater; or powder-like shapes having a diameter of 1 mm or less.

As the plastic material, for example, those derived from petroleum or those derived from biological resources such as plants may be used.

Examples of petroleum-derived plastic materials include, in addition to the above-mentioned polyethylene terephthalate, polypropylene (PP), polycarbonate (PC), polymethyl methacrylate (PMMA), polystyrene (PS), cyclo-olefin polymer (COP), and cyclo-olefin copolymer (COC).

Examples of plastic materials derived from biological resources include, in addition to the above-mentioned plastic materials containing sugar structures, polylactic acid (PLA), polybutylene succinate (PBS), hydroxyalkanoates (PHA), polyhydroxybutyrate (PHB), PHBH (a copolyester composed of R-3-hydroxybutyric acid (3HB) and R-3-hydroxyhexanoic acid (3HH)), cellulose or cellulose derivative materials, starch or starch derivative materials, and the like.

### <Material to Be Penetrated (First Material)>

As the first material, for example, a compound containing an element having an electronegativity lower than 2.5 may be used. In such a case, when the workpiece is a material mainly composed of carbon and nitrogen or oxygen, such as a general resin or plastic, all of these elements have electronegativities of 2.5 or higher. Therefore, it is preferable that the element contained in the first material and having an electronegativity lower than 2.5 be relatively electropositive. This provides the advantage that molecules or particles of the first material more readily penetrate into the interior of the workpiece. Specific examples include compounds containing elements belonging to Groups 1 to 13, and compounds containing Group 14 elements other than carbon.

More specifically, examples of the first material include compounds containing metal elements such as aluminum compounds, iron compounds, titanium compounds, nickel compounds, copper compounds, and zinc compounds. Because Group 14 elements other than carbon are also more electropositive than carbon, compounds containing silicon, germanium, tin, or lead can also be used as the first material.

Examples of aluminum compounds include trimethylaluminum and aluminum chloride.

Examples of iron compounds include ferrocene, bis(N,N'-diisopropylbutanamidinate)iron, bis(N,N'-diisopropylpropionamidinate)iron, and the like.

Examples of silicon compounds include triethylsilane and tris(dimethylamino)silane (TDMAS).

Among the above compounds, those in which an atom of an element having an electronegativity lower than 2.5 is bonded directly or via a heteroatom to an organic group are particularly preferable because they tend to be relatively volatile. Compounds in which a transition metal element is bonded to a carbonyl group, an allyl group, or another carbon-containing group exhibit relatively high volatility and are suitably used as the first material.

### <Material to Be Penetrated (Second Material)>

The second material is appropriately selected in consideration of factors such as its combination with the first material, the workpiece, and the desired treatment of the workpiece. Examples include inert gases such as argon, helium, and nitrogen; water (H₂O); oxidizing gases such as oxygen and ozone (O₃); halogen gases such as bromine, chlorine, and iodine; carburizing gases such as carbon monoxide and alcohols such as methanol or ethanol; nitriding gases such as ammonia; and reducing gases such as hydrogen and hydrocarbon gases.

As for the physical properties of the second material, it may be a solid having sublimability such as iodine, a liquid such as bromine, or a gas such as argon or helium. The second material is selected appropriately depending on its combination with the first material, the workpiece, and the desired treatment of the workpiece.

### <EXAMPLE 1>

Example 1 is an example in which polyethylene terephthalate, which is a copolymer, was used as the workpiece. The polyethylene terephthalate used in this example had been processed into pellet form by converting powdered polyethylene terephthalate into pellets using an extruder, a cooling stage, and a pelletizer.

One kilogram of these pellets was placed inside the containment container 26 of the chamber section 20 of the material penetration apparatus 100. The temperature of the chamber section 20 was set between 80°C and 120°C.

The chamber section 20 had a cylindrical structure, and rotation was performed using, as the rotation axis, a straight line connecting the substantial center of the first main surface of the cylinder and the substantial center of the second main surface facing the first main surface.

The rotation speed was set between 10 rpm and 100 rpm, and during at least a portion of the period in which rotation was carried out, the interior of the chamber section 20 was depressurized using a vacuum pump VP, establishing a reduced-pressure state of 5 Pa inside the chamber section 20.

As the first material, liquid trimethylaluminum at room temperature was placed in the primary tank 11 for the first material. The liquid trimethylaluminum inside the primary tank 11 for the first material was heated to 130°C, and the vaporized trimethylaluminum was supplied into the chamber section 20.

The vaporized trimethylaluminum was supplied until the degree of reduced pressure in the chamber section 20 reached 500 Pa. When the degree of reduced pressure in the chamber section 20 reached 500 Pa, the nozzle 18 of the connecting pipe 12 was closed.

As a result, the pellets placed in the containment container 26 were exposed to the vaporized trimethylaluminum.

In the chamber section 20, the pellets were subjected to oscillation accompanying the above-described rotation or were mixed within the chamber section 20.

As a result, the vaporized trimethylaluminum penetrated into the interior of the pellets, and the gaseous trimethylaluminum came into contact with the polyethylene terephthalate, causing the aluminum atoms of the trimethylaluminum to coordinate to the carbonyl groups of the polyethylene terephthalate. The vaporized trimethylaluminum was supplied for 1000 seconds.

Thereafter, the vaporized trimethylaluminum that had not interacted with the polyethylene terephthalate inside the chamber section 20 was removed using the vacuum pump VP.

Subsequently, as the second material, vaporized water (H₂O) at 100-105°C was supplied into the chamber section 20 until the degree of reduced pressure reached 250 Pa. After that, the nozzle 18 connected to the connecting pipe 14 was closed.

During at least a portion of the period in which the vaporized water was supplied into the chamber section 20 via the connecting pipe 14 and the nozzle 18 connected thereto, or after that period ended, the chamber section 20 was rotated using, as the rotation axis, the straight line connecting the substantial center of the above-described first main surface and the substantial center of the above-described second main surface. The period during which the vaporized water was supplied in this example was 250 seconds.

By rotating in this manner while exposing the pellets placed inside the containment container 26 to water vapor, the uniformity of penetration of the water vapor into the interior of the pellets can be improved.

The water vapor that penetrated into the pellets reacted with the trimethylaluminum, which had previously been penetrated into the pellets as the first material, to produce aluminum oxide and methane.

Thereafter, the interior of the chamber section 20 was depressurized again using the vacuum pump VP. This removed the methane generated by the reaction between the trimethylaluminum and the water vapor. Nitrogen or argon was then supplied into the chamber section 20 to return the internal pressure to atmospheric pressure, the lid portion 21 was opened, and the pellets that had undergone the above series of treatments were removed.

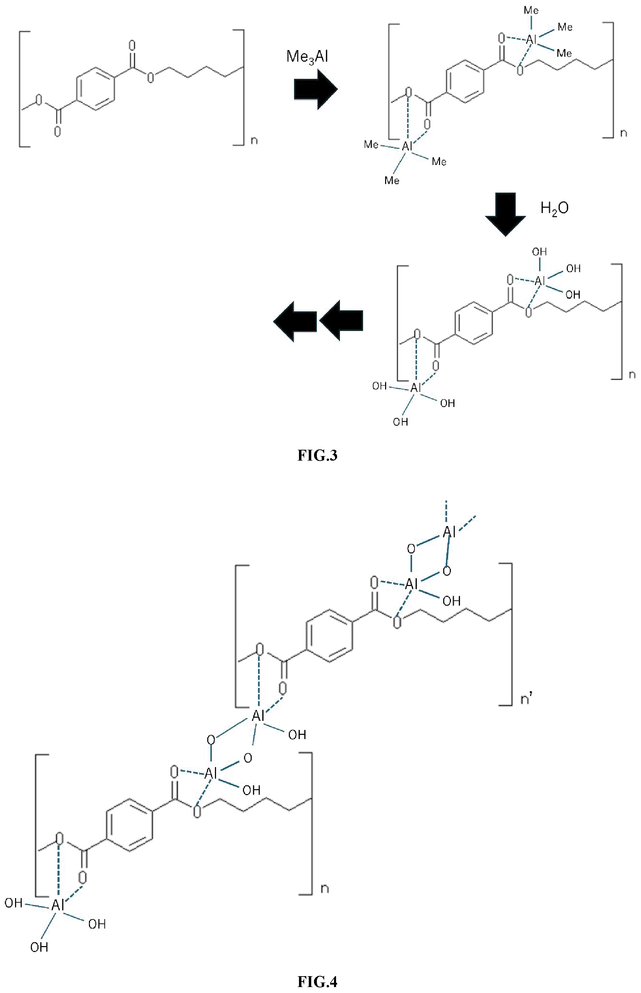

A schematic diagram of the treatment applied to polyethylene terephthalate using trimethylaluminum-an organometallic compound containing aluminum, an element having an electronegativity lower than 2.5-and water vapor is shown in FIG. 3.

In the structural formula of polyethylene terephthalate, n is an integer of 2 or greater.

When vaporized trimethylaluminum is penetrated into polyethylene terephthalate, the aluminum atom of the trimethylaluminum, being electropositive and having high affinity for oxygen atoms, interacts with the oxygen atom of the ester group of the polyethylene terephthalate, thereby forming a coordinated structure with the ester group.

When water vapor is applied to such a coordinated structure in which the aluminum atom-being an electropositive element-is coordinated to the oxygen atom-also an electropositive (less electronegative) element-the methyl groups on the aluminum atom of the trimethylaluminum dissociate to form methane, and the aluminum atom is converted into a hydroxy-substituted form.

As a result, the aluminum atom becomes bonded to an oxygen atom, which is more electronegative than carbon. This makes the aluminum atom more electropositive, and the interaction between the aluminum atom and the ester group is believed to become stronger.

Furthermore, by subjecting the material to additional heating or reduced pressure from the state in which the aluminum atom bears a hydroxy group, the hydroxy group on the aluminum atom undergoes a dehydrative condensation reaction with the hydroxy group on an adjacent aluminum atom. As shown in FIG. 4, the main chain of the polyethylene terephthalate is thereby modified to form a crosslinked structure through aluminum atoms and oxygen atoms. Such a structure improves properties of the plastic, including strength, hardness, heat resistance, and refractive index.

### < EXAMPLE 2>

Example 2 is an example in which polybutylene terephthalate, which is a copolymer, was used as the workpiece. The polybutylene terephthalate used in this example had been processed into pellet form by converting powdered polybutylene terephthalate into pellets using an extruder, a cooling stage, and a pelletizer.

As in Example 1, the pelletized polybutylene terephthalate was treated using trimethylaluminum and water vapor.

### <EXAMPLE 3>

Example 3 relates to the synthesis of polyethylene diglyoxylate xylose, which is a so-called bioplastic material produced from biological-resource-derived raw materials, and to the treatment applied to the polyethylene diglyoxylate xylose.

The synthesis of polyethylene diglyoxylate xylose was carried out according to the following procedure:

### First Step:

D-xylose obtained through extraction from corncobs followed by purification, and glyoxylic acid (aqueous solution) produced from corn-derived ethylene glycol were heated together in the presence of sulfuric acid as a catalyst. The mixture was then dehydrated under reduced pressure state to obtain a crude product mainly composed of GX (hereinafter referred to as "crude GX").

The crude product obtained above was identified by analytical and spectroscopic methods including thin-layer chromatography (TLC), infrared spectroscopy (IR), gas chromatography (GC), and nuclear magnetic resonance (NMR).

### Second Step:

Crude GX was reacted by adding sulfuric acid and methanol and heating under reflux. The reaction mixture was extracted with dichloromethane, washed with water, dried, and concentrated to obtain a crude product mainly composed of the methyl ester of GX (MX) (hereinafter referred to as "crude MX"). The formation of crude MX was confirmed by TLC, IR, GC, NMR, and other analytical methods.

### Third Step:

Purified MX, ethylene glycol, and antimony(III) oxide were subjected to a polycondensation reaction under heating and reduced pressure. The obtained polymer was crystallized using hexafluoro-2-propanol (HFIP/IPA) to yield polyethylene diglyoxylate xylose.

More specifically, 63.0 g of D-xylose (0.420 mol), 126.0 g of 50% aqueous glyoxylic acid (0.851 mol), and 2.1 g of sulfuric acid were charged into a 500-mL round-bottom flask. The mixture was heated and concentrated using a rotary evaporator (bath temperature: 90°C; pressure: 1.6 kPa; reaction time: 3 hours) to obtain 121.8 g of crude GX (crude yield: 100%).

To 70.0 g of crude GX, 0.3 g of sulfuric acid and 120.0 g of methanol were added, and the mixture was refluxed for 2 hours. After the reflux, sodium bicarbonate was added to the reaction mixture, which was then concentrated. The residue was extracted with dichloromethane, washed with water, and the washed dichloromethane solution was dried over magnesium sulfate. The organic layer was filtered and concentrated to obtain 59.0 g of crude MX (yield: 48%).

Next, crude MX (100 g, 35 mmol) was mixed with ethylene glycol (86 mmol, 2 equivalents), 5 mg of dibutyltin oxide, 10 mg of Irganox 1076, and 10 mg of triphenyl phosphite in a 300-mL round-bottom flask.

The mixture was then heated to 140°C in an oil bath while stirring. After 4 hours, 2 mg of dibutyltin oxide was added to the reaction mixture. The mixture was then heated to 190°C to advance the polycondensation reaction. The reaction was stopped after 8 hours. The reaction mixture was cooled to room temperature and dissolved in a minimum volume (250 mL) of 1,1,1,3,3,3-hexafluoroisopropanol. The resulting solution was added dropwise into methanol (1 L) to precipitate the polymer. The polymer was collected by filtration, washed with isopropyl alcohol followed by diethyl ether, and vacuum dried at 60°C for 24 hours to obtain polyethylene diglyoxylate xylose as a white powder. This white powdered polyethylene diglyoxylate xylose was then pelletized using an extruder, cooling stage, and pelletizer.

One kilogram of these pellets was treated with trimethylaluminum and water using the material penetration apparatus 100. The specific processing procedure was the same as in Example 1, in which the material penetration apparatus was used to treat polyethylene terephthalate.

In the structural formula of polyethylene diglyoxylate xylose, n is an integer of 2 or greater.

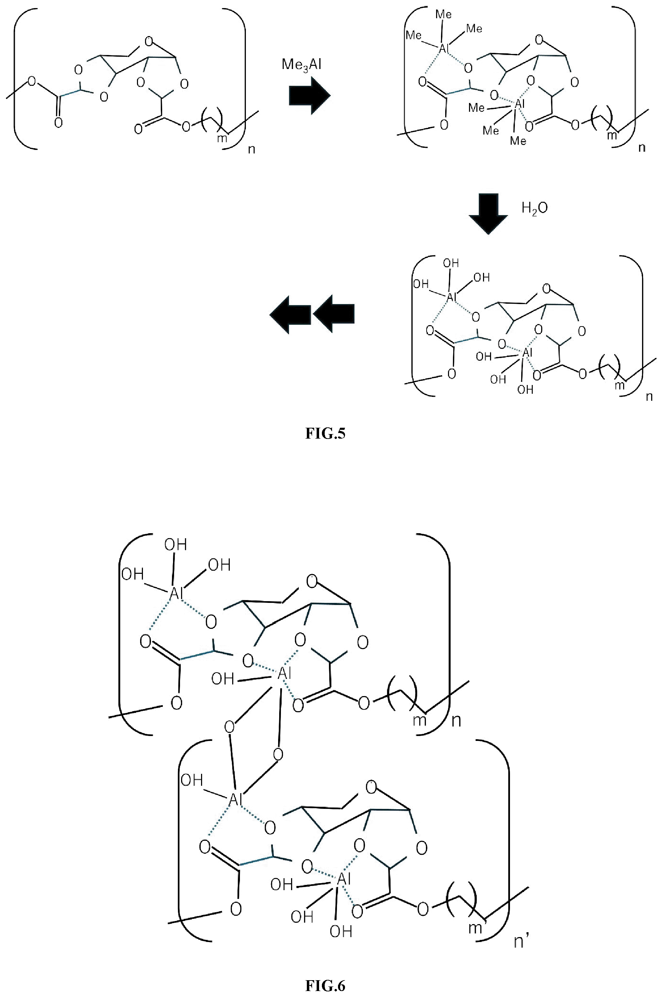

When vaporized trimethylaluminum is caused to penetrate into polyethylene diglyoxylate xylose, the aluminum atom of the trimethylaluminum, having low electronegativity and high affinity for oxygen atoms, interacts with the oxygen atom of the ester group or acetal group of the polyethylene diglyoxylate xylose, forming a coordinated structure with the ester group or acetal group, as shown in FIG. 5.

When water vapor is applied to such a coordinated structure in which the aluminum atom-an electropositive element-is coordinated to an oxygen atom-also an electropositive (less electronegative) element-the methyl groups on the aluminum atom of the trimethylaluminum dissociate to form methane, and the aluminum atom is converted into a hydroxy-substituted form.

In this state, the aluminum atom becomes bonded to an oxygen atom that is more electronegative than carbon. As a result, the positive charge on the aluminum atom increases, and the interaction between the aluminum atom and the ester group or acetal group is believed to be strengthened.

Furthermore, by subjecting the material to additional heating or reduced pressure from the state in which the aluminum atom bears a hydroxy group, the hydroxy group on the aluminum atom undergoes a dehydrative condensation reaction with the hydroxy group on an adjacent aluminum atom. As shown in FIG. 6, the main chain of the polyethylene diglyoxylate xylose is thereby modified to form a crosslinked structure through aluminum atoms and oxygen atoms. Such a structure improves properties of the plastic, including strength, hardness, heat resistance, and refractive index.

### <EXAMPLE 4>

The synthesis of polypropylene diglyoxylate xylose was carried out in the same manner as the synthesis of polyethylene diglyoxylate xylose described in Example 3, except that 1,3-propanediol was used in place of ethylene glycol.

Furthermore, as in Example 3, the resulting polymer was pelletized, and the pellets were subjected to treatment using trimethylaluminum and water vapor with the material penetration apparatus 100, in the same manner as described in Example 3.

### <EXAMPLE 5>

Polyethylene dipyruvate xylose (5a) was synthesized by using pyruvic acid in place of the glyoxylic acid used in Example 3, and then following the same procedure as in Example 3. 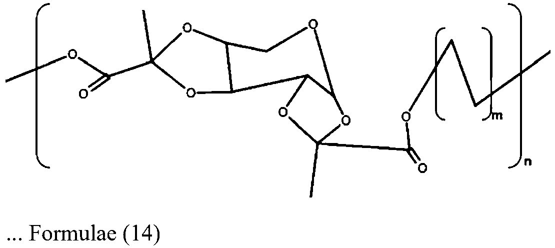 (m and n are integers of 1 and 2 or greater, respectively.)

In addition, polyethylene dioxobutyrate xylose (5b), represented by the formula below, was synthesized by replacing the glyoxylic acid used in Example 3 with 2-oxobutyric acid and then following the same procedure. 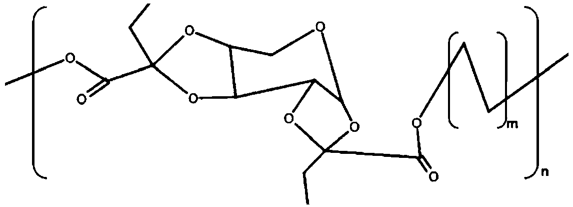 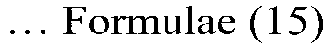 (m and n are integers of 1 and 2 or greater, respectively.)

Additionally, by replacing the glyoxylic acid used in Example 3 with 6-oxoheptanoic acid and following the same procedure, polyethylene dioxoheptanoate xylose (5c), represented by the formula below, was synthesized. 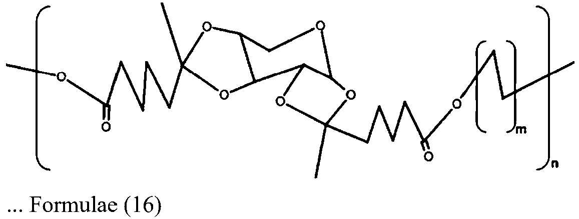 (m and n are integers of 1 and 2 or greater, respectively.)

The polymers 5a, 5b, and 5c described above were pelletized in the same manner as in Example 3, and the pellets were subsequently subjected to treatment with trimethylaluminum and water vapor using the material penetration apparatus 100, also in the same manner as in Example 3.

### <EXAMPLE 6>

By replacing the D-xylose used in Example 3 with fucose and following the same procedure, polyethylene diglyoxylate fucose (6a), represented by the following formula, was synthesized. 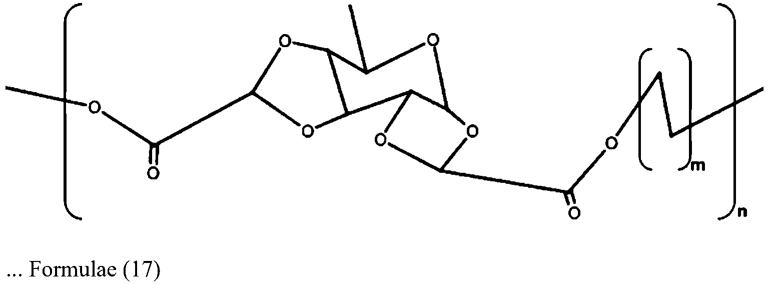 (m and n are integers of 1 and 2 or greater, respectively.)

By replacing the D-xylose used in Example 3 with fucose and also replacing glyoxylic acid with pyruvic acid, and then following the same procedure, polyethylene pyruvate fucose (6b), represented by the following formula, was synthesized. 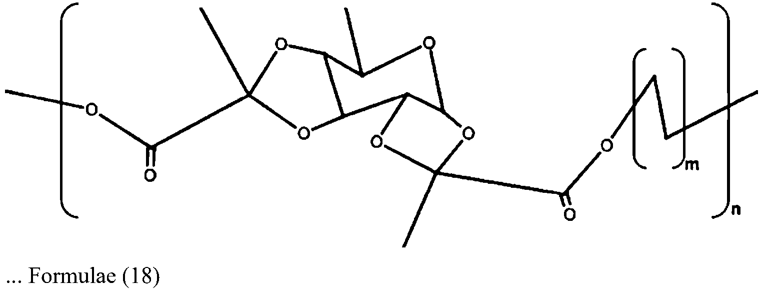 (m and n are integers of 1 and 2 or greater, respectively.)

By replacing the D-xylose used in Example 3 with fucose and replacing glyoxylic acid with 2-oxobutyric acid, and then following the same procedure, polyethylene dioxobutyrate fucose (6c), represented by the following formula, was synthesized. 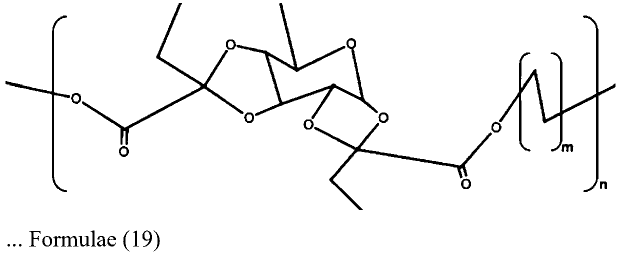 (m and n are integers of 1 and 2 or greater, respectively.)

By replacing the D-xylose used in Example 3 with fucose and replacing glyoxylic acid with 6-oxoheptanoic acid, and then following the same procedure, polyethylene oxo-diheptanoate fucose (6d), represented by the following formula, was synthesized. 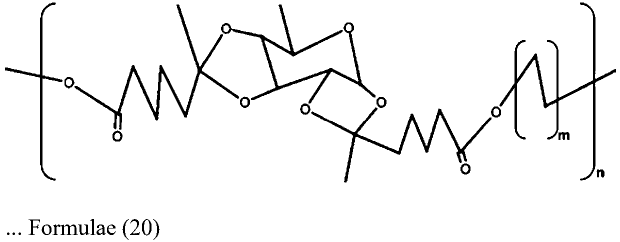 (m and n are integers of 1 and 2 or greater, respectively.)

The polymers 6a, 6b, 6c, and 6d described above were pelletized in the same manner as in Example 3, and the pellets were subsequently treated with trimethylaluminum and water vapor using the material penetration apparatus 100, also in the same manner as in Example 3.

### <EXAMPLE 7>

By replacing the D-xylose used in Example 3 with glucose and following the same procedure, polyethylene diglyoxylate glucose (7a), represented by the following formula, was synthesized. 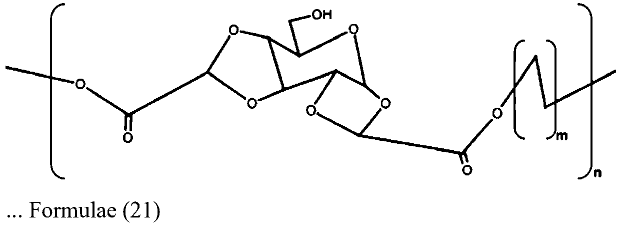 (m and n are integers of 1 and 2 or greater, respectively.)

By replacing the D-xylose used in Example 3 with glucose and replacing glyoxylic acid with pyruvic acid, and then following the same procedure, polyethylene dipyruvate glucose (7b), represented by the following formula, was synthesized. 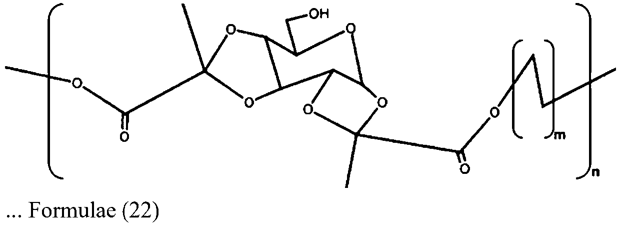 (m and n are integers of 1 and 2 or greater, respectively.)

Furthermore, by replacing the D-xylose used in Example 3 with glucose and replacing glyoxylic acid with 2-oxobutyric acid, and then following the same procedure, polyethylene dioxobutyrate glucose (7c), represented by the following formula, was synthesized. 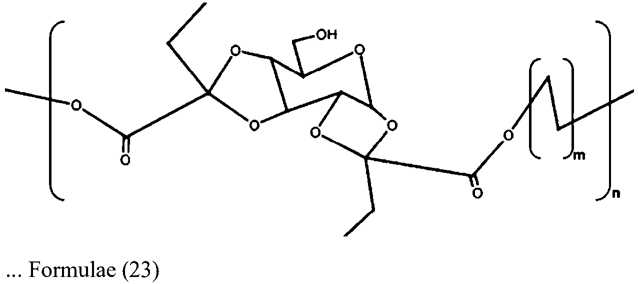 (m and n are integers of 1 and 2 or greater, respectively.)

Additionally, by replacing the D-xylose used in Example 3 with glucose and replacing glyoxylic acid with 6-oxoheptanoic acid, and then following the same procedure, polyethylene dioxoheptanoate glucose (7d), represented by the following formula, was synthesized. 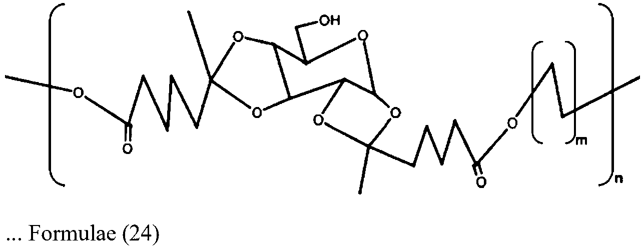 (m and n are integers of 1 and 2 or greater, respectively.)

The polymers 7a, 7b, 7c, and 7d described above were pelletized in the same manner as in Example 3, and the pellets were subsequently treated with trimethylaluminum and water vapor using the material penetration apparatus 100, also in the same manner as in Example 3.

### <EXAMPLE 8>

Sugar derivatives that do not have the above-described polycyclic structures as their basic units-i.e., ordinary sugar derivatives-were pelletized in the same manner as in the foregoing examples, and further subjected to penetration treatment using trimethylaluminum and water vapor.

For each polymer or plastic material, as well as for the materials subjected to substance penetration, tensile properties such as tensile strength, flexural properties such as flexural strength, Izod impact strength, heat deflection temperature, and other characteristics were measured.

The results are shown in Table 1.

For comparison, a material composed of the sugar derivative used in Example 8 but not subjected to penetration treatment with trimethylaluminum and water vapor was used as the comparative example.

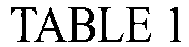

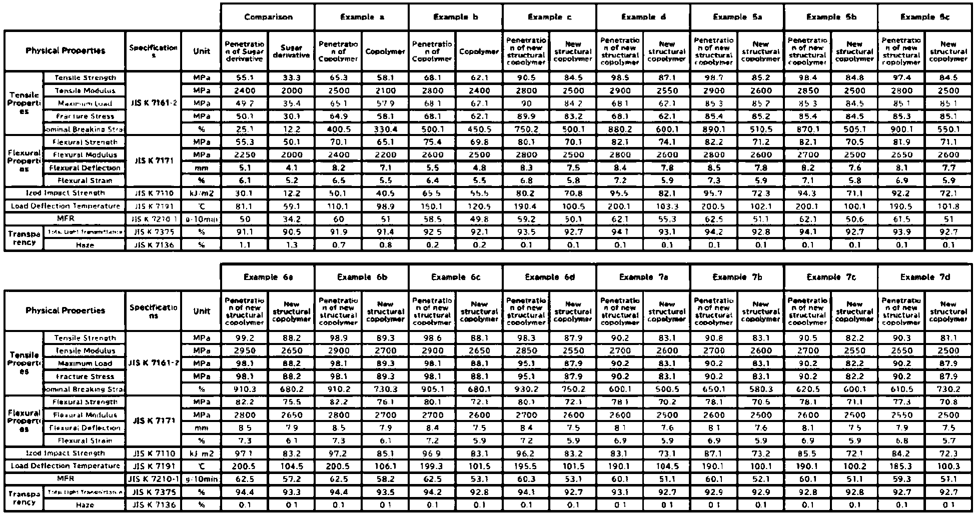

As is evident from Table 1, polymers or plastics subjected to substance penetration treatment exhibited improvements in many properties-such as tensile properties, flexural properties, Izod impact strength, and heat deflection temperature-compared with those that did not undergo such treatment.

In particular, polymers or plastics whose basic units include sugar-derivative polycyclic structures showed significant improvements in many properties-such as tensile properties, flexural properties, Izod impact strength, and heat deflection temperature-through substance penetration.

Next, the pellets that had undergone substance penetration treatment using trimethylaluminum and water vapor in the above examples were subjected to a melt-spinning process to produce fibers. Melt spinning was carried out using a conventional melt-spinning apparatus, and the fibers were extruded as a 24-filament multifilament yarn. The spinning temperature and the take-up speed were adjusted appropriately during melt spinning, and the resulting yarn was subsequently drawn using a drawing machine. As fiber properties, the fineness, tensile strength, and elongation at break were measured.

The results are shown in Table 2.

For the polyethylene terephthalate sample of Example 1 that had not undergone penetration treatment, the polybutylene terephthalate sample of Example 2 that had not undergone penetration treatment, and the comparative example pellets that had not undergone penetration treatment, spinning defects were observed under the evaluation conditions employed. In contrast, the samples that had undergone penetration treatment could be successfully spun.

This demonstrates that substance penetration has the effect of enabling molding and processing-such as spinning-of plastic materials.

For sugar-derivative-type polymers having polycyclic structures with sugar ring units as their basic structural units (corresponding to Examples 3 to 7), spinning was possible regardless of whether penetration treatment had been applied. Furthermore, for the above sugar-derivative-type polymers that had undergone penetration treatment, the fiber fineness was smaller, the tensile strength was higher, and the elongation at break was greater, indicating that the fiber properties were improved.

In other words, polymers having polycyclic structures as basic units according to the present invention can themselves undergo molding or processing such as spinning; in addition, their mechanical properties can be further improved by applying substance penetration treatment.

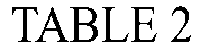

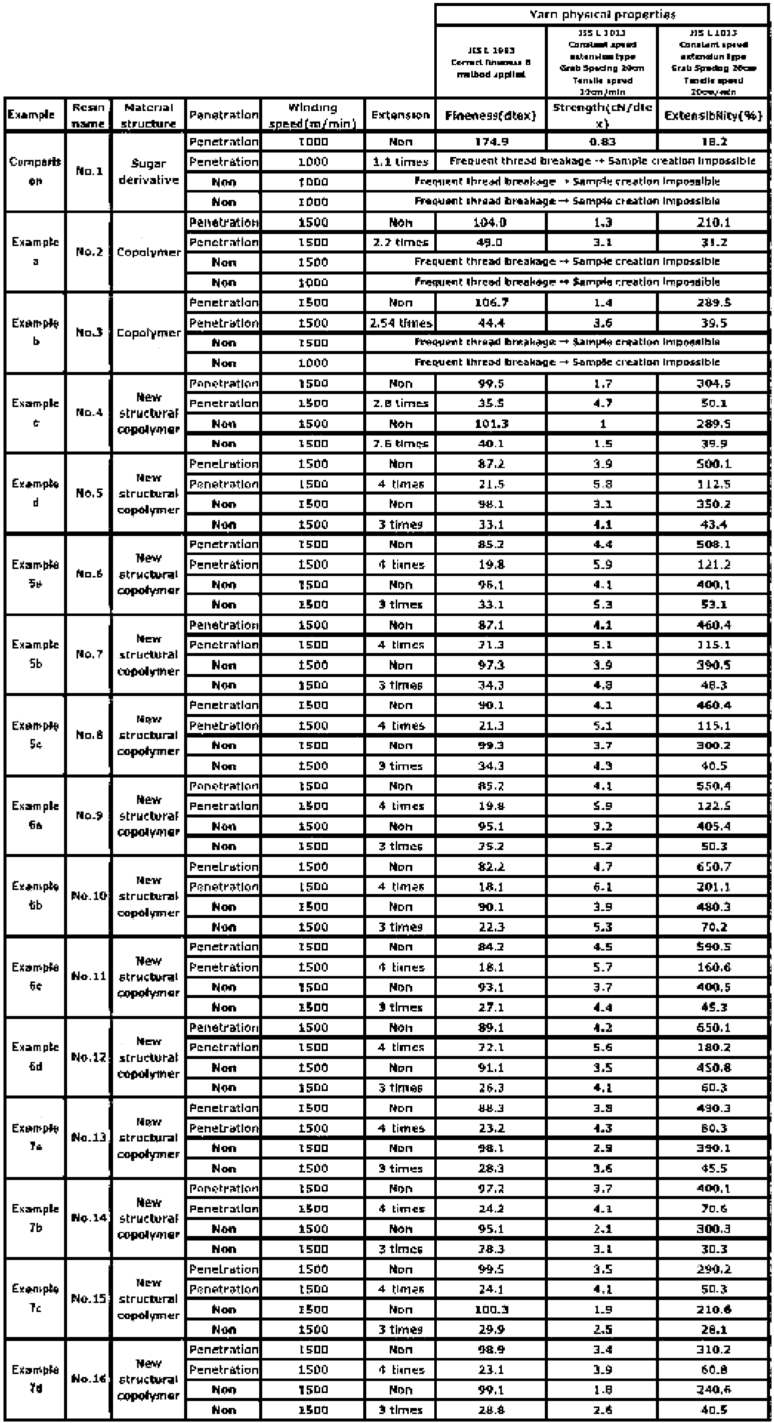

### Explanation of Reference Numerals

- 11: Primary tank for first material
- 13: Primary tank for second material
- 15: Buffer tank for first material
- 18: Nozzle
- 19: temperature adjustment unit
- 20: Chamber section
- 21: Lid portion
- 22: reduced pressure container
- 24: rotation mechanism
- 26: Containment container
- 29: Chamber heater
- 31: Gas tank
- MT: Rotation motor
- GR: Exhaust gas removal unit
- VP: Vacuum pump
- 100: Inorganic substance penetration apparatus

## Claims

1. A method for producing a plastic material containing an inorganic compound, the method comprising:
a heating step of heating a plastic material placed in a chamber section;
a vacuum step of evacuating the chamber section;
an inorganic-material supplying step of supplying, into the chamber section, an inorganic substance in a gaseous state at a first temperature;
an oscillation step of oscillating the plastic material within the chamber section to produce a plastic material containing an inorganic compound;
an exhausting step of exhausting the chamber section after the oscillation step;
a redox-material supplying step of supplying, into the chamber section after the exhausting step, at least one of an oxide and a reducing agent at a second temperature lower than the first temperature; and
an oscillation step of oscillating the plastic material containing the inorganic compound within the chamber section.

2. A method for producing an organic-inorganic hybrid material, the method comprising:
a heating step of heating a plastic material placed in a chamber section;
a vacuum step of evacuating the chamber section;
an inorganic-material supplying step of supplying, into the chamber section, an inorganic substance in a gaseous state at a first temperature;
an oscillation step of oscillating the plastic material within the chamber section to produce an organic-inorganic hybrid material;
an exhausting step of exhausting the chamber section after the oscillation step;
a redox-material supplying step of supplying, into the chamber section after the exhausting step, at least one of an oxide and a reducing agent at a second temperature lower than the first temperature; and
an oscillation step of oscillating the organic-inorganic hybrid material within the chamber section.

3. A method for producing a solid, the method comprising:
a step (a) of introducing a first gas or a plurality of first particles into a processing chamber while a workpiece serving as a raw material for the solid is placed inside the processing chamber,
wherein, in step (a), at least a portion of the first gas or at least a portion of the plurality of first particles penetrates into the interior of the workpiece.

4. The method for producing a solid according to claim 3,
wherein the workpiece has a repeating structure of a plurality of basic units.

5. The method for producing a solid according to claim 4,
wherein each of the plurality of basic units includes at least one member selected from the group consisting of a sugar backbone, an ester group, an arylene group, an ether group, an acetal group, a ketal group, a carbonyl group, and an alkylene group.

6. The method for producing a solid according to claim 3,
wherein the first gas or the plurality of first particles is at least partly composed of a first compound containing an atom of a first element having an electronegativity of less than 2.5.

7. The method for producing a solid according to claim 6,
wherein the first element is any of a Group 1 element, a Group 2 element, a Group 3 element, a Group 4 element, a Group 5 element, a Group 6 element, a Group 7 element, a Group 8 element, a Group 9 element, a Group 10 element, a Group 11 element, a Group 12 element, a Group 13 element, or a Group 14 element other than carbon.

8. The method for producing a solid according to claim 6,
wherein the electronegativity of the first element is 2.0 or less.

9. The method for producing a solid according to claim 6,
wherein the first element is any of aluminum, titanium, nickel, iron, copper, or zinc.

10. The method for producing a solid according to claim 6,
wherein the first compound includes an organic group or a substituent containing an organic group.

11. The method for producing a solid according to claim 3,
wherein, during at least a portion of the period in which step (a) is performed, vibration or oscillation is applied to the workpiece.

12. The method for producing a solid according to claim 3,
further comprising a step (b) of applying vibration or oscillation to the workpiece after step (a).

13. The method for producing a solid according to claim 3,
wherein, after step (a), or after performing at least one step following step (a),
the method further comprises a step (c) of introducing a second gas or a plurality of second particles into the processing chamber while the workpiece is placed inside the processing chamber.

14. The method for producing a solid according to claim 13,
wherein the second gas or the plurality of second particles includes at least a second compound.

15. The method for producing a solid according to claim 14,
wherein at least a portion of the first compound introduced into the interior of the workpiece through at least step (a) reacts with at least a portion of the second compound and is converted into a third compound.

16. A polymer having a plurality of structural units,
wherein a first structural unit among the plurality of structural units includes a first part and a second part,
a portion of the first part and a portion of the second part being shared,
the first part is a six-membered ring,
the six-membered ring includes a first oxygen atom, two first carbon atoms, two second carbon atoms, and one third carbon atom,
the first oxygen atom and one of the two first carbon atoms form a first covalent bond,
the first oxygen atom and the other of the two first carbon atoms form a second covalent bond,
one of the two first carbon atoms and one of the two second carbon atoms form a third covalent bond,
the other of the two first carbon atoms and the other of the two second carbon atoms form a fourth covalent bond,
one of the two second carbon atoms and the one third carbon atom form a fifth covalent bond,
the other of the two second carbon atoms and the one third carbon atom form a sixth covalent bond, the second part is a first five-membered ring composed of the one first carbon atom, the one second carbon atom, a second oxygen atom, a third oxygen atom, and one fourth carbon atom,
the one first carbon atom and the second oxygen atom form a seventh covalent bond,
the one second carbon atom and the third oxygen atom form an eighth covalent bond,
the second oxygen atom and the one fourth carbon atom form a ninth covalent bond, and
the third oxygen atom and the one fourth carbon atom form a tenth covalent bond.

17. The polymer according to claim 16,
wherein each of the plurality of structural units further includes a third part,
the third part is a second five-membered ring composed of the other of the two second carbon atoms, the one third carbon atom, a fourth oxygen atom, a fifth oxygen atom, and one fifth carbon atom,
the other second carbon atom and the one third carbon atom form a tenth covalent bond,
the other second carbon atom and the fourth oxygen atom form an eleventh covalent bond,
the one third carbon atom and the fifth oxygen atom form a twelfth covalent bond,
the fourth oxygen atom and the one fifth carbon atom form a thirteenth covalent bond, and
the fifth oxygen atom and the one fifth carbon atom form a fourteenth covalent bond.

18. The polymer according to claim 16,
wherein the one fourth carbon atom is bonded, directly or via a linking group, to a sixth carbon atom of a first carbonyl group.

19. The polymer according to claim 17,
wherein the one fifth carbon atom is bonded, directly or via a linking group, to a seventh carbon atom of a second carbonyl group.

20. The polymer according to claim 18,
wherein the sixth carbon atom forms a fifteenth covalent bond with a sixth oxygen atom.

21. The polymer according to claim 19,
wherein the seventh carbon atom forms a sixteenth covalent bond with a seventh oxygen atom.

22. The polymer according to claim 20,
wherein a second structural unit included among the plurality of structural units has the same structure as the first structural unit, and
the sixth oxygen atom forms a seventeenth covalent bond with any one of the atoms constituting the second structural unit.

23. The polymer according to claim 21,
wherein a third structural unit included among the plurality of structural units has the same structure as the first structural unit, and
the seventh oxygen atom is bonded, directly or via a linking group, to any one of the atoms included in the third structural unit.

24. The polymer according to claim 21,
wherein a third structural unit included among the plurality of structural units has the same structure as the first structural unit, and
the seventh oxygen atom forms an eighteenth covalent bond, via a linking group, with an eighth oxygen atom included in the third structural unit.

25. The polymer according to claim 24,
wherein the linking group is an alkylene group.

26. The polymer according to claim 16,
wherein at least one of the other first carbon atom and the one fourth carbon atom is bonded to a substituent containing a hydrogen atom, an alkyl group, a hydroxy group, or a heteroatom.

27. The polymer according to claim 17,
wherein at least one of the other first carbon atom and the one fifth carbon atom is bonded to a substituent containing a hydrogen atom, an alkyl group, a hydroxy group, or a heteroatom.

28. A material comprising the polymer according to claim 16 and a positive atom, which is an atom of an element having a lower electronegativity than carbon, or a compound having the positive atom.

29. The material according to claim 28,
wherein the positive atom is coordinated to at least one of the second oxygen atom and the third oxygen atom.
